# EUROPEAN PATENT SPECIFICATION

(11) **EP 0 779 175 B1**
(45) Date of publication and mention of the grant of the patent: **19.05.1999**
(21) Application number: 96203427.8
(22) Date of filing: 03.12.1996
(51) Int. Cl.: B60N 2/28

(54) **Infant safety seat**
Sicherheitssitz für Kinder
Siège de sécurité pour enfants

(30) Priority: 13.12.1995 NL 1001896
(43) Date of publication of application: 18.06.1997
(73) Proprietor: B.V. MACHINE- EN METAALWARENFABRIEK DREMEFA, 6983 BM Doesburg (NL)
(72) Inventor: Drexler, Johannes Herman, 7004 AE Doesburg (NL)
(74) Representative: Boelsma, Gerben Harm, Ir.

(56) References cited:
- EP-A- 0 317 438
- EP-A- 0 363 556
- GB-A- 2 288 328
- NL-A- 9 400 114
- US-A- 5 005 234

## Description

The invention relates to an infant safety seat as defined in the first part of claim 1.

Such an infant safety seat is disclosed in EP-A-0 603 520.

The bottom support of this well-known infant safety seat is a frame that comprises two longitudinal tube portions, which are interconnected at the foot end of the infant seat by a transverse tube portion, and which bend at the rearward end of the infant seat upwardly towards the backside of the backrest of the infant seat. Two support plates extend upwardly from the spaced longitudinal tube portions of the support frame so as to hold the bucket seat body therebetween. In front of said two support plates there is a space between the lower side of the forward part of the bucket seat body and the forward part of the support frame, which space is completely open on both sides as well as at the foot end of the infant seat. When securing the well-known infant safety seat back to front wise on a passenger's seat of a vehicle by means of a three-pointsafety-belt the hip belt portion of the (loop-shaped) safety belt is taken between thumb and index finger of both hands and may be rather easily inserted into said space from the foot end of the infant seat.

As compared with other infant safety seats, such as the one according to EP-A-0 317 438, with which the hip belt portion of the threepoints-safety belt is passed across the arm rests of the bucket seat body, the infant safety seat according to EP-A- 0 603 520 has the advantage that it requires substantially less hip belt length for its securing on a passenger's seat in the back to front mode. Due to this the latter infant seat does not suffer from the circumstance that in some automobile types the available safety belt length is rather limited.

However, with the infant safety seat according to EP-A-0 603 520 subsequent handling of the hip belt portion upon its initial insertion to put it in effective engagement with the eyelet-shaped holding means may prove rather inconvenient, more particularly in view of the fact that this handling has to take place beyond direct sight of the person doing the job.

The invention aims at overcoming this drawback of the well-known infant seat, without affecting the safety aspect.

Accordingly the infant seat proposed by this invention is characterized by the features defined in the second part of claim 1.

It will be appreciated that with the safety infant seat according to the present invention initial insertion of the hip portion of the safety belt is as easy as with the well-known infant seat. Unlike the well-known infant seat, however, with the infant seat according to the invention one may simply continue with the inserting movement to guide the hip portion of the safety belt towards the upstanding holding surface and have said hip portion automatically and effectively engage said holding surface.

It is to be noted that EP-A-0 408 415 discloses in a first embodiment an infant safety seat, which is adapted to be placed on a passenger's seat and secured thereon by means of the safety belt associated with the passenger's seat. With this infant seat an elongate reinforcement element is embedded in the backrest and seat portions of the bucket seat body. On the lower side of the bucket seat body, adjacent the foot end, said reinforcement element is projecting forwardly and downwardly from the bucket seat body to form a holding surface for a hip belt. Also with this infant seat it is rather easy to bring the hip belt into engagement with the belt holding surface. The infant seat body according to EP-A-0 408 415, however, is not adapted to be placed and secured back to frontwise. In a second embodiment, a support bottom is provided for the bucket seat which receives the hip belt in an inserting slot placed frontwise, whereby the infant seat body does not face the backrest of the adult seat (exactly like in the first embodiment described above.)

A preferred embodiment of the infant safety seat according to the present invention, wherein said belt receiving space is accessible from the foot end portion of said seat body through an insertion slit that is located at a position which is rearwardly spaced from the front edge of said bucket seat body, is characterized by the features defined in claim 2.

A preferred embodiment of the infant safety seat according to the invention has the features defined in claim 3. This embodiment allows the infant seat to be placed tightly in the dihedral angle between seat and backrest of the passenger's seat prior to inserting the hip belt portion of the three-pointsafety-belt through the inserting slit at the rearside of the bucket seat body.

In the latter embodiment of the invention the infant safety seat may have the additional features defined in claim 4.

The invention will be hereinafter further explained by a few examples with reference to the drawing.
Fig. 1 is a side view of a first embodiment of the seat according to the invention;
fig. 2 is a side view of a second embodiment of the infant seat according to the invention and
fig. 3 is a side view of a third embodiment of the infant seat according to the invention.

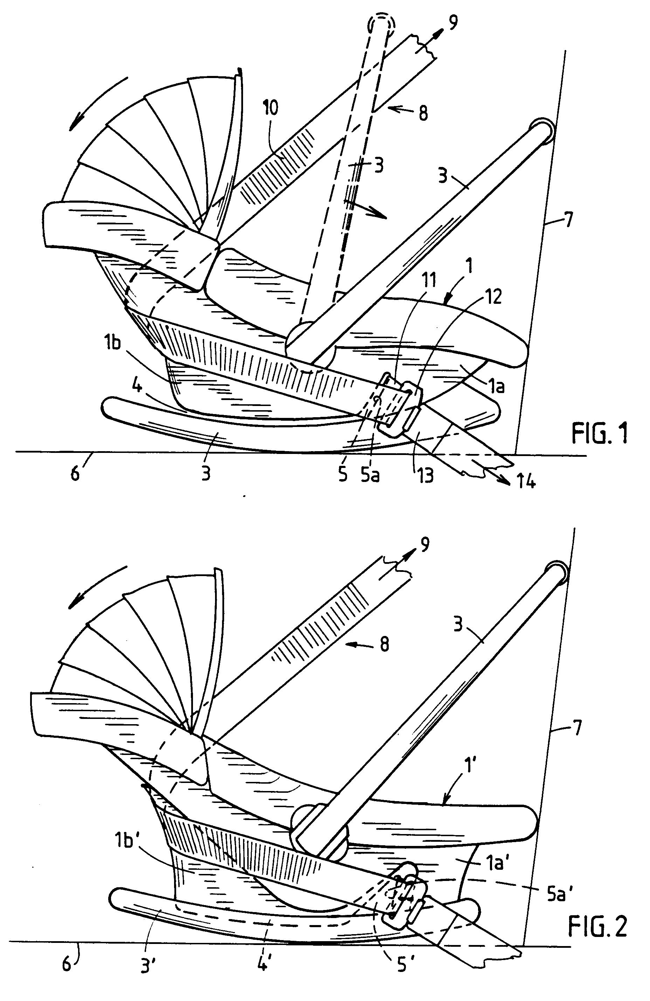

With reference to fig. 1 the infant seat shown therein has a bucket-shaped seat body 1 provided with a carrying handle that is pivotally mounted about a transverse axis. The seat body 1 is fastened on a sledge-shaped support bottom 3, which may also serve as a rocking bottom. Only the forward part la of the bucket body 1 is supported by the sledge 3; between the rearward part 1b of the bucket body 1 and the sledge 3 there is a rearwardly and laterally open insert slit 4, that is connected, at the transition between the "floating" rear part 1b of the bucket body and the forward part la of the bucket body, to a substantially upstanding and laterally open belt receiving space 5.

The drawing shows the seat with the sledge 3 supporting on the diagrammatically represented passenger's seat and with the front edge of the bucket body 1 and the carrying handle supporting against the diagrammatically represented backrest 7 of the passenger's seat in an automobile.

The infant seat is secured in its represented position on the passenger's seat by means of the safety belt 8, usually a three-pointsafety belt, belonging to said passenger's seat. The shoulder belt portion 10 of the safety belt 8 extends from an elevated fastening point 9, which is often designed for automatic winding; the hip belt portion 11 extends from a fixed fastening point (not shown) that is positioned substantially right below said fastening point 9. The shoulder belt portion 10 and the hip belt portion 11 form a loop that may be simply introduced from the front side of the passenger's seat, through the insert space 4 into the belt receiving space 5, that extends from the end of the insert space 4 upwardly. This causes the hip belt portion 11 to engage the forwardly directed surface 5a of the receiving space 5 that functions as a holding surface, whereas the shoulder belt portion 10 extends obliquely along the rear side of the bucket body 1 downwardly and forwardly. Upon having inserted the safety belt in this manner, the usual slide buckle 12 may be inserted in a well-known manner into the associated lock 13 at the "third" fastening location 14.

The rearward part 1b of the bucket body 1 and the sledge 3 could, under load, bend to one another. The sledge 3 may then also function as a stop.

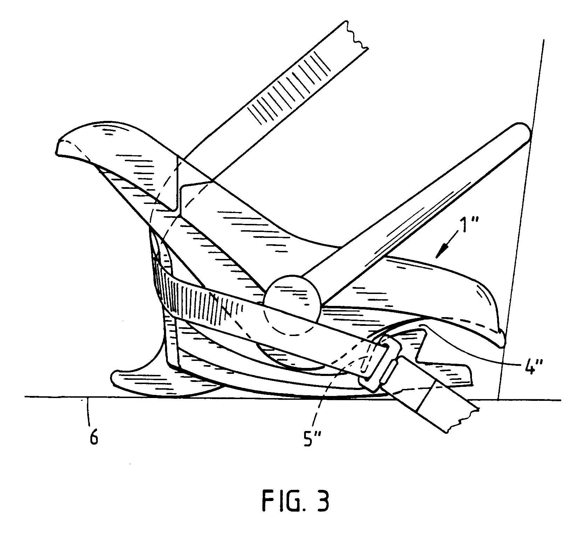

In the embodiment shown in fig. 2 the bucket seat body has a forward column-shaped portion 1a', by means of which it is fastened on the forked sledge 3'. Behind the column-shaped portion 1a' there is a transverse through belt receiving space 5a, the forward upstanding surface 5a' of which serving as a holding surface for the hip belt portion of the safety belt. Also in this case the receiving space 5' is accessible from the rear end of the body 1'. In this case, however, the rear bucket part 1b' extends further downwardly between the legs of the forked sledge 3'. Thus, as compared with the embodiment of fig. 1, the insert space 4' for the belt loop is positioned at a lower level.

In fig. 2, for clarity's sake, the hip belt portion is not shown.

Fig. 3 shows an embodiment of an infant seat according to the invention, with which the receiving space 5'' for the hip belt portion is accessible from the front side of the bucket body 1'' via an insert slit 4'', that merges from above into the receiving space 5''. As seen in the drawing the insert opening of the inserting slit 4'' is positioned at a location that is rearwardly spaced from the front edge of the seat body 1''. This enables the belt loop referred to above to be easily placed about the forward edge portion of the seat body and then inserted with the hip portion of the belt through the insert slit 4'' into the belt receiving space 5''.

## Claims

1. An infant safety seat adapted to be placed with its foot end (1a; 1a') engaging the backrest (7) of a passenger's seat in a vehicle and to be secured by means of a three-pointsafety-belt (8) with which said passenger's seat is equipped, wherein said infant safety seat comprises a bucket seat body (1; 1'; 1'') with a backrest portion (16; 16'), a foot end portion (1a; 1a') and side walls, a substantially U-shaped carrying handle (2) pivotally connected to said side walls about a transverse axis, and a support bottom (3; 3'; 3''),
means for guiding and holding the shoulder belt portion (10) of said three-pointsafety-belt (8) around the back side of the backrest portion (1b; 1b') of said bucket seat body (1; 1'; 1''),
a transverse through belt receiving space (5; 5'; 5'') between said support bottom (3; 3'; 3'') and the lower surface of said bucket seat body (1; 1'; 1''), said receiving space (5; 5'; 5'') being accessible from one end of said bucket seat body through a laterally open slit (4; 4'; 4'') so as to allow insertion of the hip belt portion (11) of said three-pointsafety-belt (8) from an end of the infant safety seat into said receiving space (5; 5'; 5'') for engagement with belt holding means (5a) provided in said belt receiving space,
characterized in that said belt holding means (5a) in said receiving space (5; 5'; 5'') is constituted by an upstanding holding surface (5a), that faces away from the foot end portion (1a; 1a') of said bucket seat body.

2. An infant safety seat according to claim 1, wherein said belt receiving space (5'') is accessible from the foot end portion of said bucket seat body (1'') through an insertion slit (4'') that is located at a position which is rearwardly spaced from the front edge of said bucket seat body (1''), characterized in that said belt inserting slot (4'') bends downwardly to merge into said belt receiving space (5'') containing said upstanding holding surface.

3. An infant safety seat according to claim 1, characterized in that said belt receiving space (5; 5') is accessible through an inserting slit (4; 4') at the rear side of said bucket seat body (1; 1'), which slit extends forwardly to merge into said belt receiving space (5; 5'), containing said upstanding holding surface (5a) adjacent the foot end portion of said bucket seat body (1; 1').

4. An infant safety seat according to claim 3, characterized in that said bucket seat body (1; 1') and said support bottom (3; 3') are formed as separate parts, which are connected at the front end of said bucket seat body (1; 1') only and are spaced from one another in the rearward direction.

## Patentansprüche

1. Kinder-Sicherheitssitz zur Montage an einem Passagierssitz in einem Fahrzeug, und zwar mit dem Fussende (1a, 1a') stossend gegen die Rücklehne (7) des Passagierssitzes, und zur Befestigung mittels eines zum Passagierssitz gehörigen Dreipunkt-Sicherheitsgurts (8), welcher Kinder-Sicherheitssitz
einen Sitzschalenkörper (1; 1'; 1'') mit einem Rückenlehnenabschnitt (16; 16'), einem Fussendenabschnitt (1a; 1a') und Seitenwänden, einem um eine Querachse schwenkbar an den Seitenwänden befestigten etwa U-förmigen Tragebügel (2), einen Stützboden (3; 3'; 3'') und
Mittel zum Fuhren und Halten des Schulterabschnitts (10) des Dreipunkt-Sicherheitsgurts (8) um die Rückseite des Rücklehnenabschnitts (1b; 1b') des Sitzschalenkörpers (1; 1'; 1'') aufweist, wobei zwischen dem Stützboden (3; 3'; 3'') und der Unterseite des Sitzschalenkörpers (1; 1'; 1'') ein sich in der Querrichtung erstreckender Zwischenraum (5; 5'; 5'') zur Gurtaufnahme vorgesehen ist, welcher Zwischenraum (5; 5'; 5'') von einem Ende des Sitzschalenkörpers her durch einen seitlich offenen Schlitz (4; 4'; 4'') zugänglich ist, um den Schulterabschnitt (11) des Dreipunkt-Sicherheitsgurts (8) von einem Ende des Sicherheitssitzes in den Zwischenraum (5; 5'; 5'') hineinführen zu können und dabei in Eingriff mit in diesem Raum vorhandenen Haltemitteln (5a) bringen zu können,
dadurch gekennzeichnet, dass die Gurt-Haltemittel (5a) im Zwischenraum (5; 5'; 5'') durch eine vom Fussendenabschnitt (1a; 1a') des Sitzschalenkörpers abgewendeten, aufstehenden Haltefläche (5a) gebildet wird.

2. Kinder-Sicherheitssitz nach Anspruch 1, wobei der zum Aufnehmen des Gurtes dienende Zwischenraum (5'') durch einen Einführschlitz (4'') vom Fussende des Sitzschalenkörpers (1'') zugänglich ist, welcher an einer vom vorderen Rand des Sitzschalenkörpers (1'') zurückliegenden Stelle angeordnet ist, dadurch gekennzeichnet, dass der Schlitz (4'') zum Einführen des Gurts nach unten biegt und in den die aufstehende Haltefläche enthaltenden Gurt-Aufnahmeraum (5'') mündet.

3. Kinder-Sicherheitssitz nach Anspruch 1, dadurch gekennzeichnet, dass der Zwischenraum (5; 5') zum Aufnehmen des Gurts durch einen an der Rückseite des Sitzschalenkörpers (1; 1') vorgesehenen Einführschlitz (4; 4') zugänglich ist, welcher Schlitz sich nach vorne erstreckt und in den die aufstehende Haltefläche (5a) in der Nähe des Fussendenabschnitts des Sitzschalenkörpers (1; 1') enthaltenden Gurt-Aufnahmeraum (5; 5') ausläuft.

4. Kinder-Sciherheitssitz nach Anspruch 3, dadurch gekennzeichnet, dass der Sitzschalenkörper (1; 1') und der Stützboden (3; 3') in Form gesonderter Teile ausgebildet sind, welche nur am vorderen Ende des Sitzschalenkörpers (1; 1') verbunden sind und weiter nach hinten im Abstand voneinanderliegen.

## Revendications

1. Siège de sécurité pour bébé destiné à être placé avec son extrémité de pied (1a ; 1a') au contact du dossier (7) d'un siège de passager dans un véhicule et à être fixé par une sangle (8) de ceinture de sécurité à trois points de fixation dont est équipé le siège du passager, dans lequel le siège de sécurité pour bébé comprend un corps de siège baquet (1 ; 1' ; 1'') ayant une partie de dossier (16 ; 16'), une partie d'extrémité du pied (1a ; 1a') et des parois latérales, une poignée (2) pratiquement en U de transport étant raccordée de manière pivotante aux parois latérales autour d'un axe transversal, et un fond de support (3 ; 3' ; 3''),
un dispositif de guidage et de maintien de la partie de sangle d'épaule (10) de la sangle (8) de ceinture de sécurité à trois points autour de la face arrière de la partie de dossier (1b ; 1b') du corps de siège baquet (1 ; 1' ; 1''), et
un espace transversal (5 ; 5' ; 5'') de logement de sangle placé entre le fond de support (3 ; 3' ; 3'') et la surface inférieure du corps de siège baquet (1 ; 1' ; 1''), l'espace de logement (5 ; 5' ; 5'') étant accessible depuis une première extrémité du corps de siège baquet par une fente ouverte latéralement (4 ; 4' ; 4'') pour permettre l'insertion de la partie (11) de sangle de hanche de la sangle (8) de ceinture de sécurité à trois points de fixation depuis une extrémité du siège de sécurité pour bébé dans l'espace de logement (5 ; 5' ; 5'') afin qu'elle coopère avec un dispositif (5a) de retenue de sangle placé dans l'espace de logement de sangle,
caractérisé en ce que le dispositif (5a) de maintien de sangle placé dans l'espace de logement (5 ; 5' ; 5'') est constitué par une surface ascendante de maintien (5a) tournée du côté opposé à la partie d'extrémité de pied (1a ; 1a') du corps de siège baquet.

2. Siège de sécurité pour bébé selon la revendication 1, dans lequel l'espace de logement de sangle (5'') est accessible depuis la partie d'extrémité de pied du corps de siège baquet (1'') par l'intermédiaire d'une fente d'insertion (4'') qui occupe une position espacée du bord avant du corps de siège baquet (1''), caractérisé en ce que la fente (4'') d'insertion de sangle est courbée vers le bas afin qu'elle se raccorde à l'espace (5'') de logement de sangle contenant la surface ascendante de maintien.

3. Siège de sécurité pour bébé selon la revendication 1, caractérisé en ce que l'espace (5 ; 5') de logement de sangle est accessible par une fente d'insertion (4 ; 4') placée au côté arrière du corps de siège baquet (1 ; 1'), la fente s'étendant vers l'avant afin qu'elle se fonde dans l'espace (5 ; 5') de logement de sangle contenant la surface ascendante de maintien (5a) adjacente à la partie d'extrémité de pied du corps de siège baquet (1 ; 1').

4. Siège de sécurité pour bébé selon la revendication 3, caractérisé en ce que le corps de siège baquet (1 ; 1') et le fond de support (3 ; 3') sont formés par des éléments séparés qui sont raccordés à l'extrémité avant du corps de siège baquet (1 ; 1') uniquement et sont espacés mutuellement en direction tournée vers l'arrière.
